# EUROPÄISCHE PATENTANMELDUNG

(11) **EP 0 750 433 A1**
(43) Veröffentlichungstag der Anmeldung: **27.12.1996**
(21) Anmeldenummer: 95109856.5
(22) Anmeldetag: 23.06.1995
(51) Int. Cl.: H04Q 3/00

(54) **Verfahren zur Interaktion zwischen Teilnehmer und intelligentem Netz**

(71) Anmelder: SIEMENS AKTIENGESELLSCHAFT, 80333 München (DE)
(72) Erfinder: Zygan-Maus, Renate, Dr.rer.nat., D-81477 München (DE)

(57) **Zusammenfassung**

Interaktive IN-Verbindungen erfordern bisher IN-spezifische Prozeduren sowohl in der steuernden Komponente (d.h. dem SCP) und der gesteuerten Komponente (d.h. dem Intelligent Peripheral IP), als auch im IN-Zugangsknoten (d.h. dem SSP). Dadurch, daß ein IP einem Teilnehmer gleich an das intelligente Netz angeschlossen wird und die IN-Applikationen ihre Steuerverbindung zwischen SCP und IP über Datencontainer der Signalisierung aufbauen, entfallen diese IN-spezifischen Prozeduren.

## Beschreibung

Ein Intelligentes Netz (kurz IN) soll es einem Netzbetreiber, ermöglichen, neue Dienste (Services) rasch und problemlos einzuführen, ohne dafür in jedem Netzknoten Eingriffe in die Anlagenprogrammsysteme vornehmen zu müssen. Die genannten Eingriffe werden deshalb in einem IN auf möglichst wenige zentrale Netzknoten, die sogenannten Service Control Points (kurz SCP) beschränkt, die an zentraler Stelle mit den Merkmalen der neuen Dienste, der sogenannten Dienstlogik, ausgerüstet werden und dann in einer Art "Fernsteuerung" die einzelnen Netzknoten in die Lage versetzen, die neuen Dienste auszuführen.

Die genannte Fernsteuerung erfordert allerdings entsprechende Trigger- und Eingriffspunkte in den ferngesteuerten Netzknoten. Ferngesteuerte Netzknoten des IN werden im folgenden als Dienst-Zugangsknoten oder Service Switching Points (kurz SSP) bezeichnet. Sie sind direkt oder über ein Signalisierungsnetz wie beispielsweise das Signalisierungsnetz CCS7 mit einem Service Control Point verbunden.

Ein Ruf zu einem Service des intelligenten Netzes (im folgenden kurz IN-Service genannt) kann von einem normalen, d.h. nicht von einem SCP ferngesteuerten, Netzknoten zunächst zu einem Service Switching Point SSP geroutet werden. Anhand der gewählten Nummer und/oder des Service Codes bestimmt der Service Switching Point, welcher Service Control Point SCP die diesem Service entsprechende Dienstelogik enthält und sendet anschließend zu diesem Service Control Point eine Anfrage, wie er den Ruf zu behandeln hat. Nachdem der SCP die Anfrage untersucht hat, sendet er eine Antwort zum Service Switching Point, die Informationen beinhaltet, die dieser zur weiteren Behandlung des Rufes benötigt.

Für viele Dienste in intelligenten Netzen ist nun ein interaktiver Dialog des IN mit dem Dienstenutzer (Service User) erforderlich. Für die Abwicklung dieses Dialogs über Nutzkanäle werden spezielle periphere Einrichtungen, sog. Intelligent Peripherals (kurz IP), verwendet, die über IN-spezifische Schnittstellen (d.h. keine normale Teilnehmerschnittstellen) an SSPs angeschlossen sind und von der Dienstelogik, die im Service Control Point, kurz SCP, des intelligenten Netzes enthalten ist, gesteuert werden.

Die bisher verwendeten Verfahren erfordern IN-spezifische Prozeduren sowohl in der steuernden Komponente (d.h. dem SCP) und der gesteuerten Komponente (d.h. dem Intelligent Peripheral), als auch im SSP. Darüber hinaus sind die erforderlichen Prozeduren unterschiedlich je nachdem, ob der Intelligent Peripheral an demselben SSP angeschlossen ist, an dem der IN-Ruf getriggert wurde oder an einem anderen SSP.

Die bisher genannten Verfahren haben somit zur Folge, daß die derzeitigen IN-Implementierungen bereits für Punkt-zu-Punkt-Verbindungen sehr komplex sind. Geplante IN-Implementierungen für Mehrpunkte-Verbindungen werden dadurch noch erheblich schwieriger.

Für Punkt-zu-Punkt-Verbindungen kommen im SSP bisher zwei IN-Prozeduren zur Anwendung, nämlich die sog. "Relay-Prozedur" für den Fall, daß der intelligente Peripheral am triggernden SSP angeschlossen ist und die sog. "Assist-Prozedur" für den Fall, daß der Intelligent Peripheral remote ist, d.h. nicht an dem triggernden SSP angeschlossen ist (vgl. dazu auch ETS 300 374-1 (ETSI Core INAP), Kapitel 7.3.5.1 - 7.3.5.4).

Die Relay-Prozedur beinhaltet folgende INAP-Operationen: ConnectToResource, PlayAnnouncement, SpecializedResourceReport, PromptAndCollectUserInformation, DisconnectForwardConnection.

Die Assist-Prozedur beinhaltet folgende INAP-Operationen: EstablishTemporaryConnection, AssistRequestInstructions, PlayAnnouncement, SpecializedResourceReport, PromptAndCollectUserInformation, DisconnectForwardConnection.

Die genannten erforderlichen INAP-Operationen für Punkt-zu-Punkt-Verbindungen verdeutlichen die Komplexität des bisherigen Verfahrens.

Der Erfindung liegt die Aufgabe zugrunde, ein Verfahren anzugeben, durch das Implementierungen für IN-Verbindungen, insbesondere für komplexe IN-Verbindungen, stark vereinfacht werden und ein IP anzugeben, das mit einem SCP nach dem genannten Verfahren zusammenwirkt.

Diese Aufgabe wird durch ein Verfahren gemäß Anspruch 1 bzw. ein Intelligent Peripheral gemäß Anspruch 2 gelöst.

Durch die erfindungsgemäße Lösung werden gegenüber den bisher standardisierten Verfahren (ETSI Core INAP, ITU-T Empfehlung Q.1218) folgende Vereinfachungen erreicht:
- an der SSP-SCP-Schnittstelle entfallen 7 INAP-Operationen (ConnectToResource, EstablishTemporaryConnection, AssistRequestInstructions, DisconnectForwardConnection, PlayAnnouncement, PromptAndCollectUserInformation, SpecializedResourceReport; siehe ETSI Core INAP, Kap. 6.1),
- die IN-Protokollmaschine (Finite State Machine FSM)für den initialisierenden SSP reduziert sich von fünf Zuständen auf drei Zustände, nämlich auf die Zustände "Idle", "Waiting for Instructions", "Monitoring"),
- die IN-Protokollmaschine für den Assisting/Hand-Off SSP entfällt,
- die IN-Protokollmaschine für den SCP benötigt nur mehr eine einzige IN-Prozedur für das Feature "User Interaction", die unabhängig von der Lage der intelligenten Peripherals im Netz ist. Nach den bisherigen Verfahren muß der SCP verschiedene Protokollmaschinen unterstützen, je nachdem, ob der IP über die "Relay-Prozedur" (falls der IP am triggernden SSP angeschlossen ist, "co-located IP") oder über die "Assist-Prozedur" (falls der IP nicht am triggernden SSP angeschlossen ist, "remote IP") mit dem SCP kommuniziert,
- die IN-Applikationen im SCP und IP benötigen keine separate physikalische Kommunikationsschnittstelle(z.B. über Ethernet) für ihre Steuerbeziehung,
- die IN-Applikationen müssen, im Unterschied zur Lösung mit einer separaten physikalischen Kommmunikationsschnittstelle, den Zusammenhang zum betroffenen Nutzkanal nicht selbst herstellen, da die Korrelation zwischen der Steuerungsinformation und dem Nutzkanal durch den existierenden Bezug zwischen der normalen Teilnehmersignalisierung und dem Nutzkanal bereits gegeben ist. Im SCP entfällt deshalb die Generierung und Verwaltung von Korrelationskennungen (SCF-ID, Correlation ID).

Im folgenden wird ein Ausführungsbeispiel der Erfindung anhand der Zeichnung näher erläutert. Die Zeichnung umfaßt zwei Figuren.

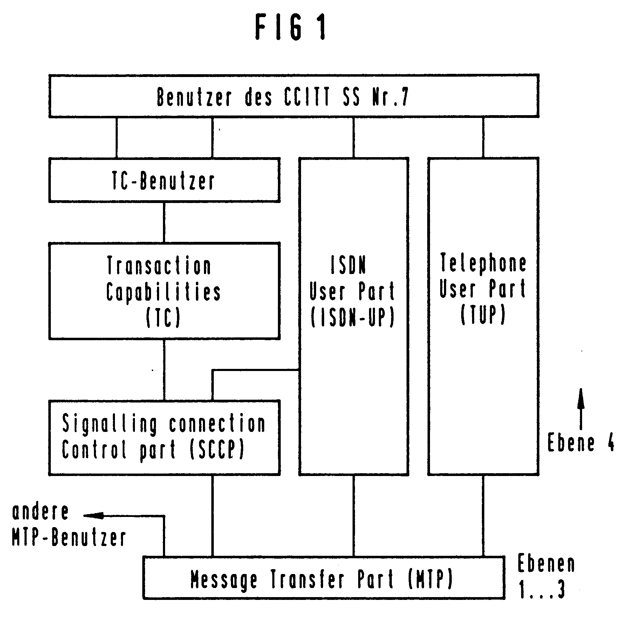

FIG 1 zeigt die Struktur des Signalisierungssystems Nr. 7. Das Signalisierungssystem Nr. 7 legt die Modalitäten und Informationsinhalte der Signalisierung zwischen Netzknoten fest. Es ist nicht mehr an die Kommunikationswege der Nutzinformation gebunden und kann deshalb als ein "eigenständiges" Netz betrachtet werden.

Die Basis des Signalisierungssystems Nr. 7 bildet ein Nachrichtenübertragungsteil (Message Transfer Part MTP). Er ist ein für alle Signalisierungsarten einheitlicher Transportrahmen, in den die eigentliche Signalisierungs-Nutzinformation eingebettet wird. Das Format der Nutzinformation ist benutzerspezifisch (netzspezifisch), weshalb auf dem MTP verschiedene Benutzerteile aufsetzen, wie z.B. der ISDN-Benutzerteil (ISDN-User-Part ISUP) und der Transaction Cababilities Application Part TCAP.

Die Struktur des Signalisierungssystems 7 umfaßt außerdem eine Signalisierungsverbindungs-Steuerung (Signalling Connection Control Part SCCP), die auf dem MTP aufsetzt, und die ihre Dienste einerseits Teilen des ISUP anbietet und andererseits dem TCAP. Der SCCP ergänzt das System Nr. 7 mit der ursprünglich nicht vorgesehenen Möglichkeit für logische Signalisierungsverbindungen (Beispiel: End-to-End-Signalisierungsverbindungen im ISDN). Die Transaction Capabilities TC unterstützen Funktionen, die nicht zu den Standardsignalisierungsvorgängen für Nutzkanäle zählen und z.B. für den Betrieb von Intelligenten Netzen benötigt werden.

Über den genannten Strukturteilen thronen die Benutzer (User) des Systems Nr. 7, nämlich z.B. IN-Applikationen und ISDN-Applikationen.

Erfindungsgemäß wird nun ein IP einem normalen ISDN-Teilnehmer gleich an das Intelligente Netz angeschlossen und die IN-Applikationen bauen ihre Steuerverbindung zwischen SCP und IP über das Signalisierungsnetz und die ISDN-Teilnehmersignalisierung auf.

Um die Steuerverbindung in erfindungsgemäßer Weise über das Signalisierungsnetz und die Teilnehmersignalisierung zu ermöglichen, wird für einen teilnehmergleich an ein ISDN-Netz angeschlossenen IP eine Erweiterung der ISDN-Signalisierung verwendet, die zur Zeit in der ITU-T (ITU-Telecommunication Standardization Sector), Study-Group 11, Genf, April 24/Mai 5, 1995 für die Kommunikation zwischen einer IN-Dienstelogik und einem IN-Dienstenutzer im ISDN-Netz diskutiert wird. Die diskutierte Erweiterung der ISDN-Signalisierung umfaßt im ISUP zwei neue Informationselemente, nämlich ein Informationselement STUI, das als Container für Informationen vom SCP an einen Teilnehmer dient, und ein Informationselement UTSI, das als Container für Informationen von einem Teilnehmer an den SCP dient. Entsprechend der Erfindung wird das Informationselement STUI als Container für Steuerungsinformationen vom SCP an ein teilnehmergleich ans Netz angeschlossenes IP verwendet, und das Informationselement UTSI dient als Container für Informationen von einem teilnehmergleich angeschlossenen IP an den SCP.

Die Vorteile der Verwendung der genannten Erweiterung für die IP-Steuerung sind:
- Die IN-Applikationen im SCP und IP benötigen keine separate physikalische Kommunikationsschnittstelle für ihre Steuerbeziehung,
- die Korrelation zwischen der Steuerungsinformation und dem Nutzkanal ist gegeben durch den existierenden Bezug zwischen der normalen Teilnehmersignalisierung und dem Nutzkanal. Im SCP entfällt deshalb die Generierung und Verwaltung von Korrelationskennungen (SCF-ID, Correlation ID).

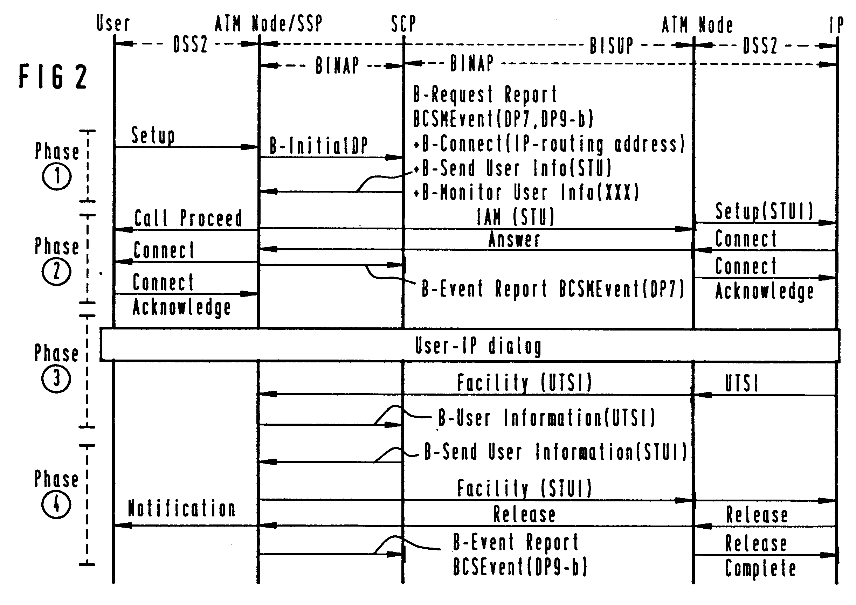

FIG 2 zeigt beispielhaft den im Rahmen eines IN-Rufes auftretenden Fluß an Steuerungsinformationen zwischen den Komponenten des intelligenten Netzes.

### Phase 1:

Ein IN-Ruf wird im SSP getriggert. Der SCP veranlaßt daraufhin einen Verbindungsaufbau zu einem IP. Er verwendet dabei den STUI-Container, um dem IP Anweisungen zu geben, wie der Dialog mit dem User zu führen ist.

### Phase 2:

Der Nutzkanal zwischen Dienstenutzer und IP wird aufgebaut. Der SSP benachrichtigt den SCP bei Empfang der Meldung "ANSWER" vom IP. Die Übertragung des STUI-Containers im ISUP und an der digitalen Teilnehmerschnittstelle erfolgt wie für einen normalen B-Teilnehmer. Der STUI enthält als Steuerinformationen z.B. Anweisungen, wie der Dialog die mit dem Dienstenutzer zu führen ist (z.B. Play/Prompt-Anweisungen).

### Phase 3:

Der IP führt den User-Dialog durch. Über weitere UTSI-STUI-Signalisierung erfolgt die weitere Steuerung des IP.

### Phase 4:

Der SCP weist den IP über einen entsprechenden STUI-Container an, den User-Dialog zu beenden. Der IP löst daraufhin den Nutzkanal aus. Der SSP benachrichtigt den SCP darüber und hält den A-Teilnehmer. Die weitere Behandlung des IN-Rufes kann wie nach einer mit bisherigen Prozeduren realisierten Interaktionsphase erfolgen.

## Patentansprüche

1. Verfahren zur Interaktion zwischen Teilnehmer und Intelligentem Netz, demgemäß
die Interaktion des Intelligenten Netzes mit dem Teilnehmer von einem intelligenten Peripheral (kurz IP) durchführt wird, das einem Teilnehmer gleich an das Intelligente Netz angeschlossen ist, und
das IP zur Durchführung der Interaktion von einem zentralen Netzknoten (SCP) gesteuert wird, indem der SCP und das IP einander in Datencontainern Informationen senden, wobei die Datencontainer über das Signalisierungsnetz und die Teilnehmersignalisierung transparent übertragen werden.

2. Intelligentes Peripheral in einem Intelligenten Netz, das im Zusammenhang mit einem IN-Dienst den interaktiven Dialog des Intelligenten Netzes mit einem Dienstenutzer durchführt und hierzu von einem zentralen Netzknoten (SCP) gesteuert wird,
**dadurch gekennzeichnet,**
daß das intelligente Peripheral (IP) einem Teilnehmer gleich an das intelligente Netz angeschlossen ist und eine logische Schnittstelle umfaßt, über die das intelligente Peripheral (IP) mit dem zentralen Netzknoten (SCP) in Datencontainern Informationen austauscht, wobei die Datencontainer über das Signalisierungsnetz und die Teilnehmersignalisierung transparent übertragen werden.
